# EUROPEAN PATENT APPLICATION

(11) **EP 2 322 772 A1**
(43) Date of publication of application: **18.05.2011**
(21) Application number: 09813043.8
(22) Date of filing: 04.09.2009
(51) Int. Cl.: F01N 3/02, B01D 53/86, B01D 53/94, F01N 3/08, F01N 3/24, F01N 3/28

(54) **EXHAUST CLEANER FOR DIESEL ENGINE**

(30) Priority: 09.09.2008 JP 2008230820
(71) Applicant: UD Trucks Corporation, Saitama 362-8523 (JP)
(72) Inventor: HIRATA, Kiminobu, Ageo-shi Saitama 362-8523 (JP); MASAKI, Nobuhiko, Ageo-shi Saitama 362-8523 (JP); YANO, Masakazu, Ageo-shi Saitama 362-8523 (JP)
(74) Representative: Hemmer, Arnd
(86) International application number: PCT/JP2009/065521
(87) International publication number: WO 2010/029897

(57) **Abstract**

A DPF disposed in an exhaust passage of a diesel engine is coated with a selective reducing catalyst, for selectively reducing and purifying NOx by using a reducing agent, and a thin film, having fine pores of size for allowing passage of the NOx and preventing passage of PM, in this order. In regeneration treatment of a DPF, the thin film prevents direct transmission of combustion heat of the PM to the selective reducing catalyst and suppresses a temperature rise of the selective reducing catalyst to thereby suppress deterioration of an active component.

## Description

### TECHNICAL FIELD

The present invention relates to a technique for removing nitrogen oxides (NOx) and particulate matter (PM) in exhaust gas in an exhaust gas purification apparatus for a diesel engine.

### BACKGROUND ART

As an exhaust gas purification apparatus for simultaneously removing NOx and PM included in exhaust gas of a diesel engine, an apparatus including a diesel particulate filter (DPF) coated with a NOx selective reducing catalyst as disclosed in Japanese Laid-Open (Kokai) Patent Application Publication No. 2006-274986 (Patent Literature 1) has been proposed. In this exhaust gas purification apparatus, the PM is trapped and removed by the DPF while the NOx is selectively reduced and purified in the NOx selective reducing catalyst by using ammonia, produced from a urea aqueous solution injection-supplied on an exhaust upstream side of the DPF, as a reducing agent.

### CITATION LIST

### PATENT LITERATURE

Patent Literature 1: Japanese Laid-Open (Kokai) Patent Application Publication No. 2006-274986

### SUMMARY OF THE INVENTION

### TECHNICAL PROBLEM

In the DPF, if clogging develops as an amount of trapped PM increases, exhaust pressure increases over an acceptable value to result in low fuel economy. Therefore, regeneration treatment is indispensable, in the regeneration treatment, the PM trapped by the DPF is incinerated by the well-known method such as increasing exhaust temperature by an engine control and actuating an electric heater provided to the DPF. Because temperature of the DPF increases due to incineration heat of the PM during the regeneration treatment of the DPF, temperature of the NOx selective reducing catalyst applied to the DPF increases as well. In the NOx selective reducing catalyst, there is a possibility that an active component is deteriorated by heat due to the excessive temperature rise.

Therefore, in view of the above conventional problems, the present technique has an object to provide an exhaust gas purification apparatus for a diesel engine, in which it is possible to prevent direct transmission of incineration heat of the PM to the NOx selective reducing catalyst applied to the DPF to thereby suppress deterioration of an active component.

### SOLUTION TO PROBLEM

In the exhaust gas purification apparatus, a DPF disposed in an exhaust passage of a diesel engine is coated with a selective reducing catalyst, for selectively reducing and purifying NOx by using a reducing agent, and a thin film, having fine pores of size for allowing passage of the NOx and preventing passage of PM, in this order.

### ADVANTAGEOUS EFFECTS OF INVENTION

With this exhaust gas purification apparatus, the PM included in exhaust gas of the diesel engine cannot pass through the thin film and therefore is trapped in a surface of the thin film. On the other hand, the NOx included in the exhaust gas passes through the thin film, reaches the selective reducing catalyst, and is selectively reduced and purified by the selective reducing catalyst by using a reducing agent. During regeneration treatment of the DPF, the thin film prevents direct transmission of incineration heat of the PM to the selective reducing catalyst to suppress a temperature rise of the selective reducing catalyst. As a result, it is possible to suppress deterioration of an active component.

### BRIEF DESCRIPTION OF DRAWINGS

FIG. 1 is an overall block view illustrating an example of an exhaust gas purification apparatus in which the present technique is embodied;
FIG. 2 is an explanatory view of a state in which a DPF is coated with a NOx selective reducing catalyst and a thin film; and
FIG. 3 is an enlarged view of a portion A in FIG. 2.

### DESCRIPTION OF EMBODIMENTS

Hereunder is a detailed description of the present technique with reference to the accompanying drawings.

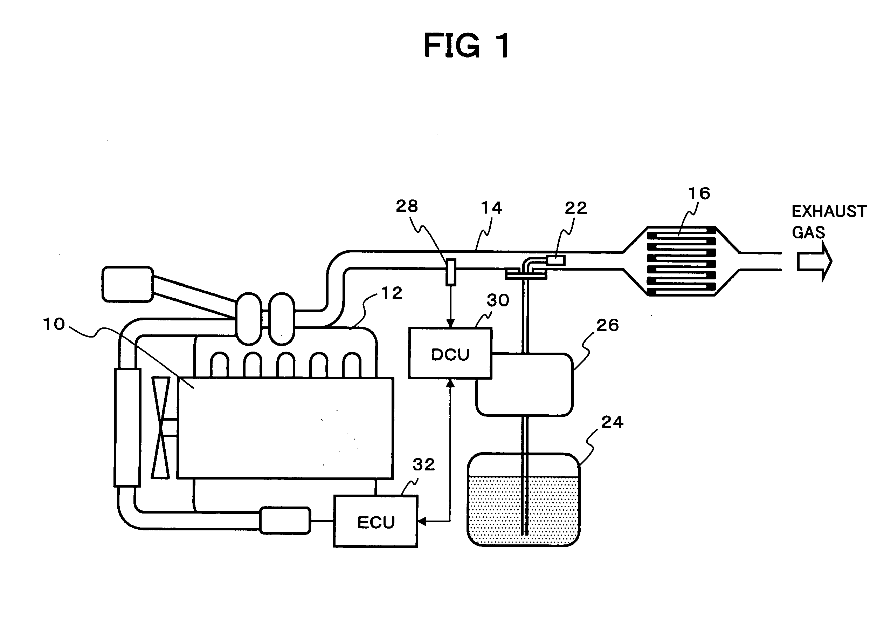

FIG. 1 is a general block view of an exhaust gas purification apparatus for purifying NOx and PM included in exhaust gas of a diesel engine by using a urea aqueous solution which is a reducing agent precursor.
In an exhaust pipe 14 (exhaust passage) connected to an exhaust manifold 12 of a diesel engine 10, a DPF16 for trapping and removing the PM in the exhaust gas is disposed. The DPF 16 has a large number of cells formed substantially parallel to an exhaust gas flow by partition walls formed of porous members such as ceramics and inlets and outlets of the respective cells are alternately sealed with sealing members in a staggered pattern. When the exhaust gas in the cell with the sealed outlet flows into the adjacent cell with the sealed inlet through the partition wall, the PM in the exhaust gas is trapped by the porous member forming the partition wall.

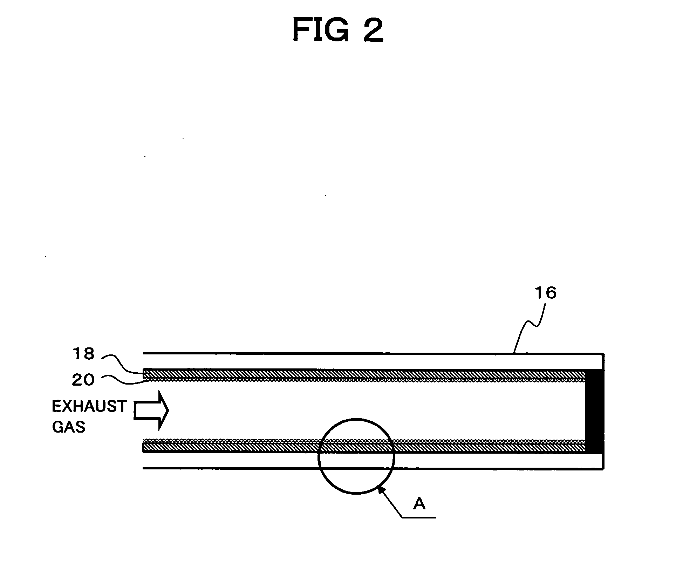

As illustrated in FIG. 2, an exhaust inflow face of the DPF 16 is coated with a NOx selective reducing catalyst 18, for selectively reducing and purifying the NOx by using ammonia as a reducing agent, and a thin film 20, having fine pores of size for allowing passage of the NOx and preventing passage of the PM, in this order. Here, as a method of applying the NOx selective reducing catalyst 18, for example, an active component may be directly supported on a surface of the DPF 16 or a washcoat of a carrier having an active-component-impregnated layer may be applied on the surface of the DPF 16. On the other hand, as the thin film 20, it is preferable to employ alumina or zeolite in order to make it easy to form the thin film 20.

A spray nozzle 22 for spraying the urea aqueous solution is disposed in the exhaust pipe 14 on an exhaust upstream side of the DPF 16. The urea aqueous solution stored in a reducing agent tank 24 is supplied to the spray nozzle 22 via a reducing agent dosing device 26 including a pump and a flow rate control valve.
As a control system of the exhaust gas purification apparatus, in the exhaust pipe 14 on the exhaust upstream side of the spray nozzle 22, a temperature sensor 28 for measuring temperature (exhaust temperature) of the exhaust gas introduced into the DPF 16 is disposed. An output signal of the temperature sensor 28 is input to a reducing agent dosing control unit (hereafter referred to as "DCU (Dosing Control Unit)") 30 including a computer. The DCU 30 is connected to an engine control unit (ECU) 32 so as to be able to communicate with the ECU 32 through a network such as a CAN (Controller Area Network) in order to appropriately read in an engine rotation speed and an engine load as engine operating states. As the engine load, a known state quantity such as a fuel injection amount, torque, an accelerator opening, a throttle opening, an intake flow rate, intake negative pressure, and supercharging pressure may be used.

The DCU 30 executes a control program stored in ROM (Read Only Memory) to compute the urea aqueous solution dosing flow rate suitable to the exhaust temperature, the engine rotation speed, and the engine load, to thereby output a control signal according to the dosing flow rate to the reducing agent dosing device 26. In the reducing agent dosing device 26, the pump and the flow rate control valve are appropriately and electronically controlled based on the control signal from the DCU 30, and the urea aqueous solution of the flow rate according to the engine operating state is supplied to the spray nozzle 22.

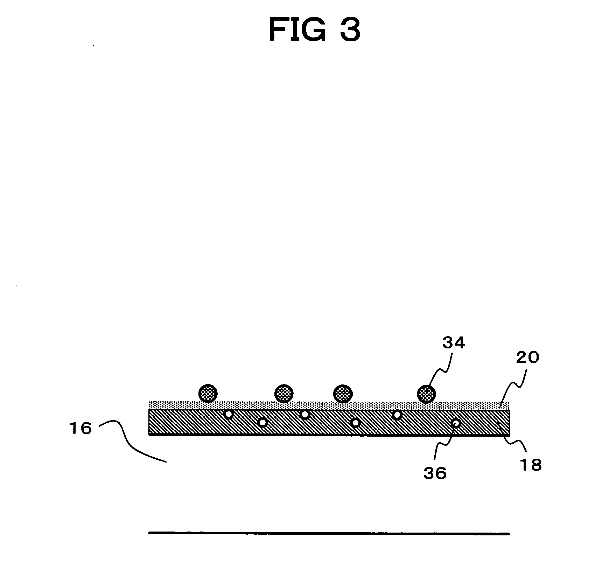

In this exhaust gas purification apparatus, the urea aqueous solution sprayed from the spray nozzle 22 into the exhaust pipe 14 is hydrolyzed by exhaust heat and water vapor in the exhaust gas and converted into ammonia and the ammonia flows in the exhaust flow and is supplied to the DPF 16. The thin film 20 applied on the exhaust inflow face of the DPF 16 has fine pores of size for allowing passage of the NOx and preventing passage of PM, and thus, as illustrated in FIG. 3, the PM 34 in the exhaust gas is trapped in the surface of the thin film 20 and the NOx 36 in the exhaust gas passes through the thin film 20 and reaches the NOx selective reducing catalyst 18. The NOx selective reducing catalyst 18 selectively reduces and purifies the NOx 36 in the exhaust gas by using the ammonia supplied while flowing in the exhaust flow.

Then, for example, even if the exhaust temperature is increased by an engine control to ignite the PM 34 in order to carry out regeneration treatment of the DPF 16, existence of the thin film 20 prevents direct transmission of incineration heat of the PM 34 to the NOx selective reducing catalyst 18. As a result, it is possible to suppress a temperature rise of the NOx selective reducing catalyst 18 to thereby suppress deterioration of the active component.
At this time, because the NOx selective reducing catalyst 18 and the thin film 20 are applied only on the exhaust inflow face of the DPF 16, exhaust-passing resistance of the DPF 16 coated with the NOx selective reducing catalyst 18 and the thin film 20 can be reduced and it is possible to suppress reduction in fuel economy and output due to increase in exhaust pressure. The thin film 20 is made of alumina or zeolite, and thus, it is easy to form the thin film 20.

Although the exhaust gas purification apparatus described above is based on the premise that the urea aqueous solution is used as the reducing agent precursor, it is also possible to use hydrocarbon, alcohol, diesel oil, solid urea, and the like as the reducing agent or the precursor thereof according to a mechanism for selectively reducing and purifying the NOx. The technique can be applied not only to the device in which the reducing agent or the precursor thereof is injection supplied into the exhaust pipe 14 but also to a device in which a catalytic converter is used to produce a reducing agent from exhaust components. Furthermore, the NOx selective reducing catalyst 18 and the thin film 20 may be applied on an exhaust outflow face as well as on the exhaust inflow face of the DPF 16. Here, because the thin film 20 applied on the exhaust outflow face of the DPF 16does not contribute to trapping of the PM, it is preferable to apply only the NOx selective reducing catalyst 18 on the exhaust outflow face of the DPF 16 from a viewpoint of reduction of the exhaust-passing resistance.

### REFERENCE SIGNS LIST

- 10: diesel engine
- 14: exhaust pipe (exhaust passage)
- 16: DPF
- 18: NOx selective reducing catalyst
- 20: thin film
- 34: PM
- 36: NOx

## Claims

1. An exhaust gas purification apparatus for a diesel engine, wherein a diesel particulate filter disposed in an exhaust passage of the diesel engine is coated with a selective reducing catalyst, for selectively reducing and purifying nitrogen oxides by using a reducing agent, and a thin film, having fine pores of size for allowing passage of the nitrogen oxides and preventing passage of particulate matter, in this order.

2. An exhaust gas purification apparatus for a diesel engine according to claim 1, wherein the thin film is applied only on an exhaust inflow face of the diesel particulate filter.

3. An exhaust gas purification apparatus for a diesel engine according to claim 1, wherein the thin film is made of alumina or zeolite.
